(19) Europäisches Patentamt
European Patent Office
Office européen des brevets

(11) EP 1 547 991 A1

(12) **EUROPEAN PATENT APPLICATION**
published in accordance with Art. 158(3) EPC

(43) Date of publication:
29.06.2005 Bulletin 2005/26

(51) Int Cl.⁷: $C04B\ 35/64$, $C04B\ 41/87$

(21) Application number: 03797580.2

(86) International application number:
PCT/JP2003/011655

(22) Date of filing: 11.09.2003

(87) International publication number:
WO 2004/026791 (01.04.2004 Gazette 2004/14)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 18.09.2002 JP 2002270837
27.09.2002 JP 2002282684
27.09.2002 JP 2002282725
18.10.2002 JP 2002303950
15.11.2002 JP 2002332270

(71) Applicant: Mitsui Mining & Smelting Co., Ltd.
Tokyo 141-8584 (JP)

(72) Inventors:
• HOSHINO, Kazutomo
c/o Mitsui Mining Smelting Co Lt
Ageo-shi, Saitama 362-0021 (JP)

• KAJINO, Hitoshi c/o Mitsui Mining Smelting Co
Ageo-shi, Saitama 362-0021 (JP)
• UCHIDA, Tatsuhiko c/o Mitsui Mining & Smelting
Ageo-shi, Saitama 362-0021 (JP)
• IDUTSU, Yasuhisa
c/o Mitsui Mining & Smelting Co
Omuta-shi, Fukuoka 836-0817 (JP)
• HORIUCHI, Koushi
c/o Mitsui Mining & Smelting Co
Omuta-shi, Fukuoka 836-0817 (JP)

(74) Representative: Pätzold, Herbert, Dr.-Ing.
Steubstrasse 10
82166 Gräfelfing (DE)

(54) **ELECTRONIC COMPONENT BURNING JIG**

(57)     A jig for calcining an electronic component including a substrate and a zirconia surface layer formed on the substrate, wherein one of the skewness, the kurtosis, the central surface average roughness the wear resistance and the thermal shock resistance of the zirconia surface layer is specified to a certain range. Consequently, the jig for calcining the electronic component can efficiently conduct the calcination without deteriorating the properties of the electronic component to be calcined.

Fig. 1

**Description**

Technical Field

The present invention relates to a jig for calcining an electronic component such as a setter, a shelf board and a saggar for calcining the electronic component such as a dielectric, a multi-layered capacitor, a ceramic capacitor, a piezoelectric element and a thermistor.

Background Art

A jig for calcining an electronic component is required to be non-reactive with ceramic electronic components to be calcined in addition to having heat resistance and mechanical strength. When an electronic component work such as a dielectric is contacted and reacted with the calcination jig, a problem arises that the characteristics may be deteriorated due to the fusion or the composition fluctuation of the work. In order to solve these problems, such solutions have been proposed that zirconia is coated on the surface of a substrate for preventing the reaction [JP-A-4(1992)-224172] and a surface layer is made of coarse zirconia and fine zirconia [for example, JP-A-8(1996)-13710]. Further, a method of specifying the arithmetic average roughness of a coated surface layer is proposed (refer to, for example, JP-A-2002-60277).

The substrate for the jig for calcining the electronic component generally includes an alumina-based material, an alumina-mullite-based material, an alumina-zirconia-based material, an alumina-magnesia-based spinel material, an alumina-mullite-cordierite-based material or a combination thereof.

For example, the alumina-mullite-based material has the higher hot strength and the excellent hot spalling property but is liable to react with an electronic component work. In order to prevent the reaction, zirconia (zirconium oxide) is coated on the surface layer of the substrate. Further, in the zirconia-coated layer, a structure containing many bubbles is used for efficiently removing a binder component contained in the electronic component during calcination and for increasing the hot spalling property of the coated layer itself. In order to form the many bubbles, the use of coarse zirconia and fine zirconia is proposed [JP-A-3(1991)177383].

Although the reactivity of the zirconia with the substrate is low, the coating of the jig may be cleaved or peeled off under an environment in which the repeated heat cycles take place due to the larger difference between thermal expansion coefficients of the substrate and the zirconia. When the jig is repeatedly used and the particles contained in the surface zirconia layer has a lower particle removal resistance or a lower abrasion resistance, the fine particles are mixed into electronic components to cause a severe problem.

The phase change from a monoclinic system to a tetragonal system takes place in the zirconia at around $1100°C$. As a result, a problem arises that the change of the thermal expansion coefficient accompanied with the phase transformation due to the repeated heat cycles eliminates the coated layer of the zirconia to generate cracks so that electronic components to be calcined are likely to be influenced by the substrate.

A two-layered coating prepared by positioning an intermediate layer made of such as alumina between the substrate and the surface layer is proposed for increasing the interlayer bonding strength and for relaxing thermal stress (JP-A-2001-213666 and JP-A-2001-32285). However, even in these two-layered coating structures, the thermal shock resistance is insufficient.

In order to solve the problem in connection with the conventional zirconia surface layer, a method of forming a surface layer consisting of coarse zirconia and fine zirconia is proposed (refer to, for example, JP-B-8(1996)-13710). In this method, the use of the coarse zirconia makes many bubbles to alleviate or absorb the difference between the thermal expansion coefficients of the substrate or the intermediate layer and the surface layer, thereby preventing occurrence of cracks and peel-off of the zirconia surface layer. The use of the fine zirconia increases the sintered ability of the zirconia surface layer to make its mechanical strength excellent. While the method of forming the surface layer with the coarse zirconia and fine zirconia is excellent for fabricating the jig for calcining the electronic component having the higher performance, the protection of the electronic component to be calcined and the efficiency of the calcination are not necessarily satisfactory.

The method of specifying the arithmetic average roughness "Ra" of the coated surface layer (refer to, for example, JP-A-2002-60277) solves a problem of fusion caused by a reaction when an electronic component work made of a dielectric is in contact with the calcination jig. However, in this method, the arithmetic average roughness "Ra" specifies only the degree of concavity and convexity so that the specification of only the arithmetic average roughness "Ra" cannot provide the jig for calcining the electronic component having the excellent performances.

A problem arises in the zirconia-coated substrate that the cracks may be generated in the coating and the coating may be peeled off after repeated heat cycles because of the large difference of the thermal expansion coefficients between the zirconia and the substrate. A considerable problem is caused that particles in the zirconia layer are dropped off to be mixed into the electronic component when the wear resistance of the surface zirconia layer is lower because the jig is repeatedly used.

The phase change from the monoclinic system to the tetragonal system takes place in the zirconia at around 1100°C. As a result, a problem arises that the volume change accompanied with the phase transformation due to the repeated heat cycles generates fine cracks so that the zirconia particles are easily dropped off to reduce the wear resistance.

An application method, a dip-coating method and a spray-coating method are used for forming the zirconia layer on the substrate surface of the jig for calcining the electronic component. In these methods relatively inexpensive and suitable for industrial production, the anti-grain detaching property and the wear resistance of the formed zirconia layer may be insufficient.

As described above, in the jig for calcining the electronic component including the substrate and the zirconia surface layer formed on the substrate, or the jig for calcining the electronic component including the intermediate layer between the substrate and the zirconia surface layer, the various problems arise, especially, based on the properties of the zirconia which have been reasons for preventing the practical use of the jig for calcining the electronic component.

Disclosure of Invention

An object of the present invention is to improve the various characteristics of the jig for calcining the electronic component by investigating the various characteristics of the conventional jig having the above problems.

A first issue of the present invention is to provide a jig for calcining an electronic component with which calcination can be conducted with a higher efficiency without deteriorating the performance of the electronic component to be calcined.

The present invention firstly is a jig for calcining an electronic component including a substrate and a zirconia surface layer formed on the substrate and having an arithmetic average roughness "Ra" from 5 to 40 $\mu$m, or a ten-point average roughness "Rz" from 30 to 130 $\mu$m, or a maximum height "Ry" from 40 to 200 $\mu$m, or a similar jig further including an intermediate layer between the substrate and the zirconia surface layer, characterized in that a skewness (deflection) "Rsk" of the zirconia surface layer is from -0.5 to 0.5 (hereinafter also referred to as first invention).

The present invention is secondly a jig for calcining an electronic component including a substrate and a zirconia surface layer formed on the substrate and having an arithmetic average roughness "Ra" from 5 to 40 $\mu$m, or a ten-point average roughness "Rz" from 30 to 130 $\mu$m, or a maximum height "Ry" from 40 to 200 $\mu$m, or a similar jig further including an intermediate layer between the substrate and the zirconia surface layer, characterized in that an acutance (kurtosis) "Rku" of the zirconia surface layer is from 2 to 3 (hereinafter also referred to as second invention).

The present invention is thirdly a jig for calcining an electronic component including a substrate and a zirconia surface layer formed on the substrate or a similar jig further including an intermediate layer between the substrate and the zirconia surface layer, characterized in that a central surface average roughness "Sa" of the zirconia surface layer is from 10 to 40 $\mu$m (hereinafter also referred to as third invention).

In the first to third inventions, the zirconia surface layer may include from 50 to 75 % in weight of the coarse particle aggregate having from 80 to 300 mesh and 50 to 25 % in weight of the fine particle bond phase having an average particle size from 0.1 to 10 $\mu$m.

In the jigs for calcining the electronic component of the first to third inventions, the surface roughness of the zirconia surface layer is maintained at a proper level so that the removal of the gas generated from the binder during the calcination of the electronic component is excellent and the reaction between the zirconia surface layer and the electronic component is suppressed to efficiently calcine the electronic component regardless of the existence of the intermediate layer.

The present invention is fourthly a jig for calcining an electronic component including a substrate and a zirconia surface layer formed on the substrate or a similar jig further including an intermediate layer between the substrate and the zirconia surface layer, characterized in that a wear resistance in a reciprocating wear test conducted in accordance with JIS-H8503 is from 10 to 200 (DS/mg) (hereinafter also referred to as fourth invention). In the fourth invention, the zirconia surface layer may include from 50 to 75 % in weight of coarse particle having from 80 to 300 mesh and 50 to 25 % in weight of fine particle having an average particle size from 0.1 to 10 $\mu$m bonded with each other by a sintering aid made of two or more metal oxides for increasing the wear resistance.

Since the wear resistance of the zirconia surface layer is increased while many bubbles are contained therein in the jig for calcining the electronic component of the fourth invention, the calcination can be performed while the removal of the binder during the calcination of the electronic component is excellent and no drop-off of the zirconia particles takes place to be mixed into the electronic component regardless of the existence of the intermediate layer.

The present invention is fifthly a jig for calcining an electronic component including a substrate and a zirconia surface layer formed on the substrate, or a similar jig further including an intermediate layer between the substrate and the zirconia surface layer, characterized in that a thermal shock resistance $\Delta T$ (=T1-T2) is 400 °C or more expressed as a temperature difference of rapid cooling which generates strength reduction in a rapid cooling bending test where the jig for calcining the electronic component is rapidly cooled from specified temperature T1 to T2 (hereinafter also referred to as fifth invention). In the fifth invention, the thickness of the zirconia layer formed on the substrate is desirably 500 μm or less, and the relative density of the zirconia surface layer is desirably between 40 % and 80% both inclusive, further the total thickness of the zirconia layer formed on the alumina intermediate layer (alumina intermediate layer + zirconia layer) is desirably 500 μm or less; the relative density of the zirconia layer is desirably between 40 % and 80% both inclusive; and the relative density of the alumina intermediate layer is desirably between 60 % and 90% both inclusive; and further, the metal oxides are desirably used as the sintering aid for calcining the zirconia layer coated on the substrate surface, the alumina intermediate layer coated on the substrate surface, and the zirconia layer coated on the alumina intermediate layer.

The fifth invention can provide the jig for calcinig the electronic component having the zirconia layer with the excellent thermal shock resistance even if the zirconia layer is prepared by using an inexpensive film forming method such as an application method, a dip coat method and a spray coat method.

Brief Description of Drawings

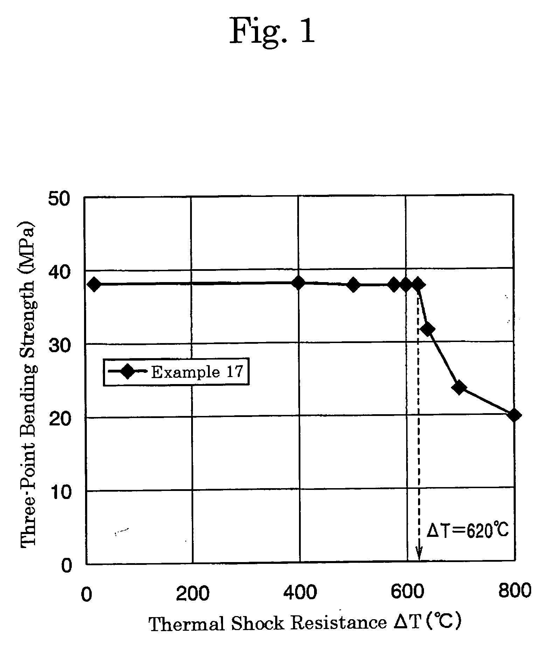

Fig.1 is a graph showing an example of evaluation of thermal shock resistance in Example 17.

Best Mode for Implementing Invention

The details of the first to fifth inventions will be described.

The surface configurations of the zirconia surface layers of the present invention can be specified such that the skewness (deflection) of the zirconia surface layer is specified in the first invention, the acutance (kurtosis) of the zirconia surface layer is specified in the second invention, the central surface average roughness "Sa" of the zirconia surface layer is specified in the third invention, the wear resistance is specified in the fourth invention, and finally the thermal shock resistance is specified in the fifth invention. The zirconia surface layers of the first to fifth inventions desirably include from 50 to 75%in weight of coarse particle aggregate having from 80 to 300 mesh and 50 to 25% in weight of fine particle bond phase. The intermediate layer may be formed in the respective inventions, or the zirconia surface layer may be formed directly on the substrate without forming the intermediate layer.

Conventionally, in the calcination of an electronic component such as a multiplayer chip capacitor, removal of a binder is required by decomposing the added binder under heating at several hundred degrees centigrade. The present inventors have found after investigations that the conditions of the surface layer of the jig for calcining the electronic component largely contributes to the removal of the gas generated due to the decomposition of the binder from the surface layer during the binder removal. That is, the excellent gas removal is desirable for the smooth binder removal, that requires maintaining the surface of the zirconia surface layer having the appropriate roughness. When the electronic component and the zirconia surface are in contact with each other excessively for calcining the electronic component at high temperature exceeding 1000°C, an undesirable reaction takes place between them. After the investigation regarding the suppression of the occurrence of the reaction, the present inventors have found that the suppression of the occurrence of the reaction can be also achieved by maintaining the surface of the zirconia surface layer having the appropriate roughness and the proper shape.

Accordingly, the first to fifth inventions realize the jigs which can perform the calcination of the electronic component more efficiently by specifying the surface roughness (degree of concavity and convexity) of the zirconia surface layer made of coarse zirconia and fine zirconia having a desired ratio and specifying the shape of the concavity and the convexity of the surface.

The material of the substrate for the jig for calcining the electronic component in accordance with the first to fifth inventions generally includes an alumina-based material, an alumina-mullite-based material, an alumina-zirconia-based material, an alumina-magnesia-based spinel material, an alumina-mullite-cordierite-based material and a combination thereof.

An intermediate layer, if formed on the substrate, can be obtained by calcining one or more metal oxides at higher temperature. The metal oxides configuring the intermediate layer include aluminum oxide (alumina, $Al_2O_3$), zirconium oxide (zirconia, $ZrO_2$), yttrium oxide (yttria, $Y_2O_3$), calcium oxide (calcia, CaO), magnesium oxide (magnesia, MgO), strontium oxide (strontia, SrO) and alumina-magnesia spinel composite oxide ($Al_2O_3$-MgO, hereinafter also referred to as "spinel oxide"), and one, or two or more are selected among these and used. Specifically, the combination between the alumina and another metal oxide is desirable. For example, the combination between the alumina and the spinel oxide or among the alumina, the calcia and the yttria can provide the intermediate layer with the excellent characteristics.

While the particle size of the metal oxide configuring the intermediate layer is not especially restricted, the intermediate layer can be configured by the metal oxide having random particle size. The mixed existence of coarse particles having an average particle size from 30 to 500 µm and fine particles having an average particle size from 0.1 to 5 µm forms voids in the intermediate layer by the coarse particle metal oxide having higher porosity thereby absorbing and alleviating the difference of the thermal expansion coefficients between the zirconia surface layer and the intermediate layer and between the intermediate layer and the substrate so that no peel-off is generated for a relatively longer period of time when used even under the heat cycles repeating raid heating and rapid cooling.

While a thickness of the intermediate layer is not especially restricted, the thickness from 50 to 200 µm is desirable when it is made of only the fine particle metal oxide. Then, the intermediate layer is calcined at higher temperature to form the intermediate layer which is sold-phase calcined or partially fused. The calcination temperature therefor is desirably higher than that at which the electronic component is actually calcined, thereby preventing the deterioration of the jig of the first to fifth inventions. Since the temperature for calcining the jig for calcining the electronic component is ordinarily from 1200 to 1400°C, the temperature for calcining the intermediate layer is preferably from 1400 to 1800 °C. The calcination of the intermediate layer can be conducted simultaneously with that of the zirconia surface layer after the formation of the zirconia surface layer, thereby reducing the number of the calcination steps.

The zirconia surface layer is directly formed on the thus prepared intermediate layer or on the substrate. The zirconia surface layer can be formed by using an application-thermal decomposition method, a spray coating method or a dip coat method. In the application-thermal decomposition method, a metal salt aqueous solution of the corresponding metal such as nitrate is applied on the substrate and thermally decomposed to be converted into the corresponding metal oxide which is coated on the substrate surface. In the spray method, a solvent having suspended metal oxide particles with the specified particle size is sprayed on the substrate surface to coat the substrate surface with the metal oxide after the solvent is scattered. In the dip-coating method, the substrate is dipped in a solution dissolving or suspending the corresponding metal oxide to form a liquid layer containing the metal oxide on the substrate surface, thereby forming the metal oxide layer after the drying for removing the solvent. In the application-thermal decomposition method and the dip-coating method, the particle size of the metal oxide is hardly controllable. Accordingly, the spray method in which the metal oxide particles having the specified particle size are directly sprayed is desirably used when the zirconia surface layers of the first to fifth inventions are formed.

The zirconia surface layer desirably includes coarse particle aggregate (coarse particle zirconia) having from 80 to 300 mesh and fine particle bond phase (fine particle zirconia) having an average particle size from 0.1 to 100 µm, especially from 1 to 5 µm.

The co-existence of the coarse particle zirconia and the fine particle zirconia forms voids in the zirconia surface layer by the coarse particle zirconia having lager porosity, thereby completely alleviating and absorbing the difference between the thermal expansion coefficients of the zirconia surface layer and the intermediate layer to form the surface layer having the denseness and the excellent sintered ability by the fine particle zirconia. While the material of the zirconia surface layer specifically includes non-stabilized zirconia, partially stabilized zirconia and stabilized zirconia, the zirconia partially stabilized with yttria, calcia and magnesia, or a mixture thereof is desirably used because the zirconia surface layer in direct contact with an electronic component should not exert ill-effects on the electronic component. The zirconia is a monoclinic system at ambient temperature, and the phase change takes place with the temperature rise from the monoclinic system $\rightarrow$ (1170°C) $\rightarrow$ tetragonal system $\rightarrow$ (2370°C) to cubic system. The higher temperature phases such as the tetragonal system and the cubic system can be "stabilized" under the ambient temperature by solid-solubilizing a partially fused-bonding agent (stabilizing agent) such as yttria and magnesia in the zirconia.

The zirconia surface layer of the first to fifth inventions may consist of the coarse particle aggregate and the fine particle bond phase or may contain other ingredients. When it is made of only the coarse particle aggregate and the fine particle bond phase, the former is preferably from 50 to 75% in weight, especially, from 60 to 70% in weight, and the latter is preferably from 50 to 25% in weight, especially, from 40 to 30% in weight. The zirconia surface layer with the coarse particle aggregate more than 75% in weight has the worse sintered ability and the easily generated fragility. When the coarse particle aggregate is less than 50% in weight or the fine particle bond phase exceeds 50% in weight, the sintering of the fine particle bond phase excessively proceeds neither to absorb nor to alleviate the difference of the thermal expansion with the material so that a warp may be generated in the material or cracks may be generated on the surface.

As described above, for providing the good removal of the gas generated from the binder during the calcination of the electronic component and for preventing the reaction between the zirconia surface layer and the electronic component, the first to fifth inventions include the zirconia surface layer made of the above material and having the surface roughness (degree of concavity and convexity) such that the arithmetic average roughness "Ra" is from 5 to 40 µm, or the ten-point average roughness "Rz" is from 30 to 130 µm, or the maximum height "Ry" is from 40 to 200 µm. In the first invention, the skewness (deflection) "Rsk" is specified to be from -0.5 to 0.5, and in the second invention, the acutance (kurtosis) "Rku" is specified to be from 2 to 3. The arithmetic average roughness "Ra", the ten-point average roughness "Rz" and the maximum height "Ry" are specified in JISB0601-1994. Further, in the third invention, the central surface average roughness "Sa" is made from 10 to 40 μm, and preferably from 15 to 25 μm, and in the fourth invention, the wear resistance in the reciprocating wear test conducted in accordance with JIS-H8503 is from 10 to 200 (DS/mg), and in the fifth invention, the thermal shock resistance ΔT (=T1-T2) is 400°C or more.

When the skewness (deflection) is below -0.5 in the first invention, the gas generated during the calcination of the electronic component is difficult to be removed, and further the contact area between the zirconia surface layer and the electronic component is increased to easily take place a reaction therebetween. Non-uniform heating is likely to generate surface irregularity after heating. When the skewness (deflection) exceeds 0.5, the zirconia surface layer becomes weak in wear and is liable to generate the fragility so that the zirconia surface layer having the sufficient strength can be hardly obtained.

Then, the acutance (kurtosis) in the second invention will be described. The acutance (kurtosis) is a value showing a degree of assemblage of a roughness curve to an average value and is specified in the following formula.

$$R_{ku} = \frac{1}{Rq^4} \bullet \frac{1}{n} \sum_{i=1}^{n} Yi^4$$

In the formula, "Rku" designates an acutance (kurtosis), "Rq" designates a square average roughness, specified in ISO4287-1984. "n" designates the number of positions where the measuring is conducted, "Yi" designates a deviation from an "i" th measuring point to the average line. The sharpness of the edge of heaps and troughs can be judged in accordance with the value of the acutance (kurtosis).

When the acutance (kurtosis) is below 2, the gas generated during the calcination of the electronic component is difficult to be removed, and further the contact area between the zirconia surface layer and the electronic component is increased to easily take place a reaction therebetween. Non-uniform heating is likely to generate the surface irregularity after the heating. When the acutance (kurtosis) exceeds 3, the zirconia surface layer becomes weak in wear and is liable to generate the fragility so that the zirconia surface layer having the sufficient strength can be hardly obtained.

Then, the central surface average roughness "Sa" of the third invention will be described.

The central surface average roughness "Sa" is a value obtained by totalizing absolute values of deviations from an average surface to a measured curve and averaging the obtained value, and is specified in the following formula.

$$Sa = \frac{1}{mn} \bullet \sum_{l=1}^{n} \sum_{k=1}^{m} \left| Y(x_k, y_i) \right|$$

In the formula, "m" designates the number of positions in the x-direction where the measuring is conducted, "n" designates the number of positions in the y-direction where the measuring is conducted, and "Y(xk, yl)" designates deviations from a "k"th measuring point in the x-direction and from an "l"th measuring point in the y-direction to an average surface. The degree of concavity and convexity of the surface can be judged in accordance with the value of the central surface average roughness. As the measuring apparatus, SV600-3D available from Kabushikigaisha Mitutoyo can be used.

While the surface roughness can be evaluated by the arithmetic average roughness "Ra" specified in JISB0601-1994, it can be evaluated more precisely by using the central surface average roughness "Sa" because of the local surface irregularity in the jig for calcining the electronic component of the present invention.

When the central surface average roughness "Sa" is below 10 μm, the gas generated during the calcination of the electronic component is difficult to be removed, and further the contact area between the zirconia surface layer and the electronic component is increased to easily take place a reaction therebetween. Non-uniform heating is likely to generate the surface irregularity after the heating. When the central surface average roughness "Sa" exceeds 40 μm, the zirconia surface layer becomes weak in wear and is liable to generate the fragility so that the zirconia surface layer having the sufficient strength can be hardly obtained.

The desired surface roughness of the first to third inventions is obtained by adjusting a particle size of particles configuring the zirconia surface layer itself, particulate distribution and composition. Further, an amount of moisture in slurry and viscosity thereof used for spray-coating and substrate temperature to be spray-coated also can be adjusted. When the intermediate layer is formed, the surface of the intermediate layer is adjusted to have the desired roughness and the zirconia surface layer may be coated on the surface of the intermediate layer in consistent with each other.

This can be achieved by configuring the intermediate layer with coarse particle aggregate and fine particle bond phase such that the roughness of the coarse particle aggregate is made larger than that of the coarse particle aggregate forming the zirconia surface layer.

Then, the fourth invention relates to the jig for calcining the electronic component having the zirconia surface layer with the increased wear resistance while containing many bubbles in the zirconia surface layer for completely absorbing and alleviating the difference of the thermal expansion coefficient between the zirconia surface layer and the intermediate layer or the substrate and making the removal of the binder excellent. The wear resistance is desirably from 10 to 200 (DS/mg).

When the wear resistance is below 10 (DS/mg), the zirconia particles tend to be mixed into the electronic component due to grain drop-off. When the wear resistance exceeds 200 (DS/mg), any special problem may arise. However, in this case, an amount of bubbles contained in the zirconia surface layer must be significantly reduced so that the binder removal becomes worse, and the difference of the thermal expansion coefficient between the zirconia surface layer and the intermediate layer or the substrate cannot be absorbed nor alleviated, thereby generating the peel-off.

A method of wear resistance test is prescribed in JIS-H8503. The wear resistance is evaluated in accordance with a reciprocating motion wear test method. JIS-H8503 recommends the test conditions such that a test load is 1.5 kgf and a particle size of abrasive paper is from #320 to 600. However, JIS-H8503 assumes the wear resistance of a plated film, and the wear resistance of the jig of the present invention is significantly inferior to that of the plated film and the evaluation conditions are too severe. Accordingly, the present test conditions are adjusted such that the test load is 50 gf smaller than the recommended load and the abrasive paper particle size is #600.

Finally, the fifth invention provides the jig for calcining the electronic component having the excellent durability which can endure for a longer period of time under the condition requiring the higher thermal shock resistance such that rapid heating and rapid cooling are repeated. In order to achieve the object, the thermal shock resistance $\Delta T$ of the jig for calcining the electronic component of the fifth invention is 400°C or more. $\Delta T$ is defined as the thermal shock resistance $\Delta T$ (=T1-T2) expressed as a temperature difference of rapid cooling which generates strength reduction in a rapid cooling bending test where the jig for calcining the electronic component is rapidly cooled from specified temperature T1 to T2. If, for example, T1=400°C and T2=0 °C (in ice water) are presumed, the thermal shock resistance $\Delta T$ is 400°C. In the thermal shock test of the fifth invention including the coated layer, temperature at which the coated layer is peeled off, cracks of several millimeters or more are generated, or the significant grain drop-off takes place is defined as $\Delta T$.

In order to attain such the thermal shock resistance, the film thicknesses of the zirconia layer coated on the substrate surface and of (alumina intermediate layer + zirconia layer) are desirably 500 μm or less, and the relative densities of the respective coated layers are desirably between 40% and 90% both inclusive.

As mentioned above, the thermal shock resistance $\Delta T$ of the jig for calcining the electronic component of the fifth invention is 400°C or more. When $\Delta T$ is below 400°C, the life of the jig is significantly shortened because the jig is deteriorated during the repetition of the rapid heating and the rapid cooling or the cracks are developed in the calcination furnace for calcining the electronic component, thereby disabling the stable operation. The thermal shock resistance of the jig for calcining the electronic component should be at least 400°C or more.

From this viewpoint, the thermal shock resistance $\Delta T$ of the substrate itself is desirably 400°C or more. When $\Delta T$ of the substrate itself is 400°C or less, the reduction of the substrate strength and the destruction or damage of the substrate may take place under the circumstance where the rapid heating and the rapid cooling are repeated. In order to achieve $\Delta T$=400°C or more, the alumina-based material, the alumina-mullite-based material, the alumina-zirconia-based material, the alumina-magnesia-based spinel material, the alumina-mullite-cordierite-based material and a combination thereof can be used as the material of the substrate.

The thickness of the structure of (substrate + film) not to deteriorate the thermal shock resistance of the substrate or the zirconia layer or (alumina intermediate layer + zirconia layer) is preferably 500 μm or less for the both layers, and more preferably, the thickness of the zirnocia single layer is 500 μm or less and that of the alumina intermediate layer + zirconia layer is 400 μm or less. The respective relative densities of the zirconia layer, the alumina intermediate layer and the zirconia layer on the alumina intermediate layer are preferably from 40 to 80%, and the relative density of the alumina intermediate layer is preferably from 60 to 90%. When the relative density of the coated layer is 40% or less, the fragility and the drop-off of the particles after the heat cycles likely take place, that are harmful to the electronic component to be calcined and shorten the life of the jig. When the thickness exceeds 500 μm, the peel-off or the cracks may be generated in the film because the thermal stress between the substrate and the coated layer under the rapid heating and the rapid cooling cannot be alleviated. When the coated layer is dense having the relative density of 90% or more, the thermal stress due to the difference of the thermal expansion coefficients between the substrate and the coated layer cannot be alleviated to easily generate the destruction of the substrate and the peel-off of the coated layer.

When, for example, the thickness and the relative density of the zirnocia layer or the alumina intermediate layer + the zirconia layer are 500 μm or more and over 90%, respectively, the strengths against the peel-off between the substrate and the surface layer and among the substrate, the intermediate layer and the surface layer are high. However, the structures cannot alleviate the thermal stress so that the cracks are generated in the coated layer due to the rapid heating and the rapid cooling. The cracks are propagated to the substrate to arise a cause of significantly lowering the thermal shock resistance of the substrate itself.

The zirconia particles used in the zirconia layer include those stabilized or partially-stabilized by $Y_2O_3$ or CaO and non-stabilized zirconia.

In order to prepare such the zirconia layer, for example, coarse zirconia of #100 and fine zirconia having an average particle size of 1 μm are mixed with an appropriate ratio. The alumina intermediate layer can be similarly prepared, and alumina particles having relatively broader particle distribution with an average particle size from 30 to 50 μm are employed. In this manner, the relative density of the coated layer can be suitably adjusted to be 90% or less.

Metal oxides can be added as a sintering aid in the zirconia layer or the alumina intermediate layer for the calcination. As the sintering aid, one or more metal oxides such as alumina, the rare-earth group oxide including $Y_2O_3$, the alkaline-earth group oxide including CaO and the transition metal oxide including $TiO_2$ can be selected. For promoting the sintering, the sintering aid forming a liquid phase may be selected. The particle size of the sintering aid is ordinarily from 0.1 to 100 μm. The addition of the sintering aid improves the thermal shock resistance to prevent the peel-off of the coated layer. The addition amount of the sintering aid is about from 0.5% in weight to 25% in weight.

Then, Examples of the jig for calcining the electronic component in accordance with the present invention will be described. However, the present invention shall not be deemed to be restricted thereto.

Example 1

An alumina-mullite substrate having about 10% in weight of a silica component was used as a substrate. As an intermediate layer, 70% in weight of alumina coarse particle aggregate having 100 mesh and 30% in weight of alumina fine particles having an average particle of about 3 μm were prepared. These were uniformly mixed in a ball mill, and then water and polyvinyl alcohol acting as a binder were added thereto for making slurry. The slurry was spray-coated on the surface of the above substrate, and dried at about 100°C. The thickness of the obtained intermediate layer was about 100 μm.

As a coarse particle aggregate and a fine particle bond phase of a zirconia surface layer, 70% in weight of yttria ($Y_2O_3$)-stabilized zirconia aggregate having 100 mesh and 30% in weight of yttria-stabilized zirconia particles having an average particle size of 3 μm, respectively, were prepared. These were uniformly mixed in a ball mill, and then water and polyvinyl alcohol acting as a binder were added thereto for making slurry. The slurry was spray-coated on the surface of the intermediate layer, and dried at about 100°C. The thickness of the zirconia layer was about 100 μm. The two-layer coated stack was retained at 1450°C for two hours to provide a jig for calcining an electronic component.

Upon the measurement of the surface roughness of the jig for calcining the electronic component with a surface roughness meter, "Ra" was 18.8 μm, "Rz" was 73.5 μm, "Ry" was 104.3 μm and "Rsk" was 0.07.

Then, the jig was rapidly heated to 1300°C and rapidly cooled to room temperature. After this heat cycle was repeated 50 times, the zirconia surface layer was rubbed with fingers to investigate the existence of fragility. Further, the existence of cracks in the zirconia surface layer was investigated. As a result, the fragility and the cracks were not generated. A barium titanate dielectric containing polyvinylalcohol aqueous solution as a binder was shaped in a pellet having a diameter of 10 mm and a thickness of 2mm. After this was placed on the jig for calcining the electronic component and retained at 1300°C for one hour and cooled, the occurrence of the reaction between the zirconia surface layer and the dielectric and the surface irregularity after heating were investigated. As a result, no reaction occurred and no surface irregularity was generated. The results were shown in Table 1.

(Table 1)

| | Surface Layer | | Intermediate Layer | | Ra/μm | Rz/μm | Ry/μm | Rsk | Existence of Fragility and Cracks | Exsitence of Reaction and Surface Irregularity After Heating | Evaluation |
|---|---|---|---|---|---|---|---|---|---|---|---|
| | Coarse Particle Aggregate | Fine Particle Bond Phase | Coarse Particle Aggregate | Fine Particle Bond Phase | | | | | | | |
| Example 1 | Yttria-stabilized zirconia ( 100mesh, 70wt.%) | Yttria-stabilized zirconia ( 3μm, 30wt.%) | Alumina 100 mesh 70 wt.% | Alumina 3μm 30 wt.% | 18.8 | 73.5 | 104.3 | 0.07 | None | None | Excellent |
| Example 2 | Yttria-stabilized zircoonia ( 200 mesh, 60wt.%) | Non-stabilized zirconia ( 3μm, 40wt.%) | None | Alumina 3μm 100 wt.% | 12.2 | 51.2 | 80.6 | 0.05 | None | None | Excellent |
| Example 3 | Yttria-stabilized zirconia ( 200 mesh, 50wt.%) | Yttria-stabilized zirconia ( 3μm, 50wt.%) | Alumina 100 mesh 70 wt.% | Alumina 3μm 30 wt.% | 8.1 | 43.4 | 68.8 | 0.03 | None | None | Excellent |
| Example 4 | Yttrria-stabilized zirconia ( 100mesh, 70wt.%) | Yttria-stabilized zirconia ( 3μm, 60wt.%) | None | None | 14.5 | 66.7 | 92.5 | 0.06 | None | None | Excellent |
| Comparative Example 1 | Yttria-stabilized zirconia ( 200 mesh,40wt.%) | Non-stabilized zirconia ( 3μm, 60wt.%) | None | Alumina 3μm 100 wt.% | 5.3 | 38.6 | 57.4 | -0.536 | Cracks Existed | Surface Irregurality After Heating Existed | No Good |
| Comparative Example2 | Yttria-stabilized zirconia ( 60 mesh,90wt.%) | Non-stabilized zirconia ( 5μm, 10wt.%) | Alumina 100 mesh 70 wt.% | Alumina 3μm 30 wt.% | 44.5 | 133.2 | 211.3 | 0.52 | Fragility Existed | None | No Good |

Example 2

A jig for calcining an electronic component was fabricated in accordance with the same procedures as those of Example 1 except that 60% in weight of yttria-stabilized zirconia aggregate having 200 mesh was used as the coarse particle aggregate of the zirconia surface layer, 40% in weight of non-stabilized zirconia powder having an average particle size of 3 μm was used as the fine particle bond phase, and the intermediate layer including only 100% in weight of alumina having an average particle size of 3 μm was used as the fine particle bond phase. Upon the measurement of the surface roughness of the jig for calcining the electronic component with a surface roughness meter, "Ra" was 12.2 μm, "Rz" was 51.2 μm, "Ry" was 80.6 μm and "Rsk" was 0.05.

Fragility, cracks, a reaction and surface irregularity after heating were not observed as a result of the test the same as that of Example 1. The results are shown in Table 1.

Example 3

A jig for calcining an electronic component was fabricated in accordance with the same procedures as those of Example 1 except that 50% in weight of yttria-stabilized zirconia aggregate having 200 mesh was used as the coarse particle aggregate of the zirconia surface layer, and 50% in weight of yttria-stabilized zirconia particles having an average particle size of 3 μm was used as the fine particle bond phase. Upon the measurement of the surface roughness of the jig for calcining the electronic component with a surface roughness meter, "Ra" was 8.1 μm, "Rz" was 43.4 μm, "Ry" was 68.8 μm and "Rsk" was 0.03.

Fragility, cracks, a reaction and surface irregularity after heating were not observed as a result of the test the same as that of Example 1. The results are shown in Table 1.

Example 4

A jig for calcining an electronic component was fabricated in accordance with the same procedures as those of Example 1 except that no intermediate layer was formed. Upon the measurement of the surface roughness of the jig for calcining the electronic component with a surface roughness meter, "Ra" was 14.5 μm, "Rz" was 66.7 μm, "Ry" was 92.5 μm and "Rsk" was 0.06.

Fragility, cracks, a reaction and surface irregularity after heating were not observed as a result of the test the same as that of Example 1. The results are shown in Table 1.

Comparative Example 1

A jig for calcining an electronic component was fabricated in accordance with the same procedures as those of Example 1 except that 40% in weight of yttria-stabilized zirconia aggregate having 200 mesh was used as the coarse particle aggregate of the zirconia surface layer, 60% in weight of non-stabilized zirconia particles having an average particle size of 3 μm was used as the fine particle bond phase, and the intermediate layer including only 100% in weight of alumina having an average particle size of 3μm was used as the fine particle bond phase. Upon the measurement of the surface roughness of the jig for calcining the electronic component with a surface roughness meter, "Ra" was 5.3 μm, "Rz" was 38.6 μm, "Ry" was 57.4 μm and "Rsk" was -0.53.

Large cracks were observed and surface irregularity after heating was also observed as a result of the test the same as that of Example 1. The results are shown in Table 1.

Comparative Example 2

A jig for calcining an electronic component was fabricated in accordance with the same procedures as those of Example 1 except that 90% in weight of yttria-stabilized zirconia aggregate having 60 mesh was used as the coarse particle aggregate of the zirconia surface layer, and 10% in weight of non-stabilized zirconia particles having an average particle size of 5 μm was used as the fine particle bond phase. Upon the measurement of the surface roughness of the jig for calcining the electronic component with a surface roughness meter, "Ra" was 44.5 μm, "Rz" was 133.2 μm, "Ry" was 211.3 μm and "Rsk" was 0.52.

Much fragility was observed as a result of the test the same as that of Example 1.

The results are shown in Table 1.

Example 5

A jig for calcining an electronic component was fabricated in accordance with the same procedures as those of Example 1.

Upon the measurement of the surface roughness of the jig for calcining the electronic component with a surface roughness meter, "Ra" was 18.8 μm, "Rz" was 73.5 μm, "Ry" was 104.3 μm and "Rsk" was 2.7.

Thereafter, the occurrence of the reaction between the zirconia surface layer and the dielectric and the surface irregularity after heating were investigated. As a result, no reaction occurred and no surface irregularity was generated. The results were shown in Table 2.

## (Table 2)

| Nos. | Surface Layer | | Intermediate Layer | | Ra/μm | Rz/μm | Ry/μm | Rsk | Existence of Fragility and Cracks | Existence of Reaction and Surface Irregularity After Heating | Evaluation |
|---|---|---|---|---|---|---|---|---|---|---|---|
| | Coarse Particle Aggregate | Fine Particle Bond Phase | Coarse Particle Aggregate | Fine Particle Bond Phase | | | | | | | |
| Example 5 | Yttria-stabilized zirconia (100mesh, 70wt.%) | Yttria-stabilized zirconia (3μm, 30wt.%) | Alumina 100 mesh 70 wt.% | Alumina 3μm 30 wt.% | 18.8 | 73.5 | 104.3 | 2.7 | None | None | Excellent |
| Example6 | Yttria-stabilized zirconia (200 mesh, 60wt.%) | Non-stabilized zirconia (3μm, 40wt.%) | None | Alumina 3μm 100 wt.% | 12.2 | 51.2 | 80.6 | 2.5 | None | None | Excellent |
| Example 7 | Yttria-stabilized zirconia (200 mesh 50wt.%) | Yttria-stabilized zirconia (3μm, 50wt.%) | Alumina 100 mesh 70 wt.% | Alumina 3μm 30 wt.% | 8.1 | 43.4 | 68.8 | 2.3 | None | None | Excellent |
| Example 8 | Yttria-stabilized zirconia (100mesh, 70wt.%) | Yttria-stabilized zirconia (3μm, 30wt.%) | None | None | 14.5 | 66.7 | 92.5 | 2.6 | None | None | Excellent |
| Comparative Example 3 | Yttria-stabilized zirconia (200 mesh,40wt.%) | Yttria-stabilized zirconia (3μm, 60wt.%) | Alumina 100 mesh 70 wt.% | Alumina 3μm 30 wt.% | 6.2 | 40.4 | 62.3 | 1.9 | Cracks Existed | Surface Irregurality After Heating Existed | No Good |
| Comparative Example4 | Yttria-stabilized zirconia (60 mesh,90wt.%) | Non-stabilized zirconia (5μm, 10wt.%) | Alumina 100 mesh 70 wt.% | Alumina 3μm 30 wt.% | 44.5 | 133.2 | 211.3 | 3.2 | Fragility Existed | None | No Good |

Example 6

A jig for calcining an electronic component was fabricated in accordance with the same procedures as those of Example 2. Upon the measurement of the surface roughness of the jig for calcining the electronic component with a surface roughness meter, "Ra" was 12.2 μm, "Rz" was 51.2 μm, "Ry" was 80.6 μm and "Rsk" was 2.5.
Fragility, cracks, a reaction and surface irregularity after heating were not observed as a result of the test the same as that of Example 1. The results are shown in Table 2.

Example 7

A jig for calcining an electronic component was fabricated in accordance with the same procedures as those of Example 3. Upon the measurement of the surface roughness of the jig for calcining the electronic component with a surface roughness meter, "Ra" was 8.1μm, "Rz" was 43.4 μm, "Ry" was 68.8 μm and "Rsk" was 2.3.
Fragility, cracks, a reaction and surface irregularity after heating were not observed as a result of the test the same as that of Example 1. The results are shown in Table 2.

Example 8

A jig for calcining an electronic component was fabricated in accordance with the same procedures as those of Example 4. Upon the measurement of the surface roughness of the jig for calcining the electronic component with a surface roughness meter, "Ra" was 14.5 μm, "Rz" was 66.7 μm, "Ry" was 92.5 μm and "Rsk" was 2.6.
Fragility, cracks, a reaction and surface irregularity after heating were not observed as a result of the test the same as that of Example 1. The results are shown in Table 2.

Comparative Example 3

A jig for calcining an electronic component was fabricated in accordance with the same procedures as those of Example 1 except that 40% in weight of yttria-stabilized zirconia aggregate having 200 mesh was used as the coarse particle aggregate of the zirconia surface layer, and 60% in weight of yttria-stabilized zirconia particles having an average particle size of 3μm was used as the fine particle bond phase. Upon the measurement of the surface roughness of the jig for calcining the electronic component with a surface roughness meter, "Ra" was 6.2 μm, "Rz" was 40.4 μm, "Ry" was 62.3 μm and "Rsk" was 1.9.
Cracks were observed on the surface, and surface irregularity after heating was generated as a result of the test the same as that of Example 1. The results are shown in Table 2.

Comparative Example 4

A jig for calcining an electronic component was fabricated in accordance with the same procedures as those of Comparative Example 2. Upon the measurement of the surface roughness of the jig for calcining the electronic component with a surface roughness meter, "Ra" was 44.5 μm, "Rz" was 133.2 μm, "Ry" was 211.3 μm and "Rsk" was 3.2.
Much fragility was observed as a result of the test the same as that of Example 1. The results are shown in Table 2.

Example 9

A jig for calcining an electronic component was fabricated in accordance with the same procedures as those of Example 1. Upon the measurement of the surface roughness of the jig for calcining the electronic component with a surface roughness meter, "Sa" was 21.1 μm ("Ra" was 18.8 μm).
Thereafter, the occurrence of the reaction between the zirconia surface layer and the dielectric and the surface irregularity after heating were investigated. As a result, no reaction occurred and no surface irregularity was generated. The results were shown in Table 3.

Example 10

A jig for calcining an electronic component was fabricated in accordance with the same procedures as those of Example 1 except that 60% in weight of yttria-stabilized zirconia aggregate having 200 mesh was used as the coarse particle aggregate of the zirconia surface layer, and 40% in weight of yttria-stabilized zirconia particles having an average particle size of 3 μm was used as the fine particle bond phase. Upon the measurement of the surface roughness of the jig for calcining the electronic component with a surface roughness meter, "Sa" was 17.8 μm ("Ra" was 12.4 μm).

Fragility, cracks, a reaction and surface irregularity after heating were not observed as a result of the test the same as that of Example 1. The results are shown in Table 3.

Example 11

A jig for calcining an electronic component was fabricated in accordance with the same procedures as those of Example 1 except that 50% in weight of yttria-stabilized zirconia aggregate having 200 mesh was used as the coarse particle aggregate of the zirconia surface layer, and 50% in weight of yttria-stabilized zirconia particles having an average particle size of 3 μm was used as the fine particle bond phase. Upon the measurement of the surface roughness of the jig for calcining the electronic component with a surface roughness meter, "Sa" was 14.6 μm ("Ra" was 8.4 μm).

Fragility, cracks, a reaction and surface irregularity after heating were not observed as a result of the test the same as that of Example 1. The results are shown in Table 3.

Example 12

A jig for calcining an electronic component was fabricated in accordance with the same procedures as those of Example 4. Upon the measurement of the surface roughness of the jig for calcining the electronic component with a surface roughness meter, "Sa" was 17.5 μm ("Ra" was 14.5 μm).

Fragility, cracks, a reaction and surface irregularity after heating were not observed as a result of the test the same as that of Example 1. The results are shown in Table 3.

Comparative Example 5

A jig for calcining an electronic component was fabricated in accordance with the same procedures as those of Example 9 except that 90% in weight of yttria-stabilized zirconia aggregate having 100 mesh was used as the coarse particle aggregate of the zirconia surface layer, and 10% in weight of yttria-stabilized zirconia particles having an average particle size of 5 μm was used as the fine particle bond phase. Upon the measurement of the surface roughness of the jig for calcining the electronic component with a surface roughness meter, "Sa" was 42.5 μm ("Ra" was 35.4 μm).

Fragility was observed in the zirconia surface layer as a result of the test the same as that of Example 1. The results are shown in Table 3.

Comparative Example 6

A jig for calcining an electronic component was fabricated in accordance with the same procedures as those of Example 9 except that 40% in weight of yttria-stabilized zirconia aggregate having 200 mesh was used as the coarse particle aggregate of the zirconia surface layer, and 60% in weight of non-stabilized zirconia particles having an average particle size of 3 μm was used as the fine particle bond phase., and the intermediate layer including only 100% in weight of alumina having an average particle size of 3 μm was used as the fine particle bond phase. Upon the measurement of the surface roughness of the jig for calcining the electronic component with a surface roughness meter, "Sa" was 8.2 μm ("Ra" was 5.3 μm).

Cracks were observed on the zirconia surface layer, and surface irregularity after heating was generated as a result of the test the same as that of Example 1. The results are shown in Table 3.

(Table 3)

EP 1 547 991 A1

15

| Example No. | Comparative Example No. | Surface Layer Coarse Particle Aggregate | Surface Layer Fine Particle Bond Phase | Intermediate Layer Coarse Particle Aggregate | Intermediate Layer Fine Particle Bond Phase | Surface Roughness Sa/μm | Surface Roughness Ra/μm | Existence of Fragility and Cracks | Existence of Reaction and Surface Irregularity After Heating |
|---|---|---|---|---|---|---|---|---|---|
| 9 | | Yttria-stabilized zirconia (100mesh, 70wt.%) | Yttria-stabilized zirconia (3μm, 30wt.%) | Alumina 100 mesh 70 wt.% | Alumina 3μm 30 wt.% | 21.1 | 18.8 | None | None |
| 10 | | Yttria-stabilized zirconia (200 mesh, 60wt.%) | Yttria-stabilized zirconia (3μm, 40wt.%) | Alumina 100 mesh 70 wt.% | Alumina 3μm 30 wt.% | 17.8 | 12.4 | None | None |
| 11 | | Yttria-stabilized zirconia (200 mesh, 50wt.%) | Non-stabilized zirconia (3μm, 50wt.%) | Alumina 100 mesh 70 wt.% | Alumina 3μm 30 wt.% | 14.6 | 8.4 | None | None |
| 12 | | Yttria-stabilized zirconia (100mesh, 70wt.%) | Yttria-stabilized zirconia (3μm, 30wt.%) | None | None | 17.5 | 14.5 | None | None |
| | 5 | Yttria-stabilized zirconia (100 mesh, 30wt.%) | Yttria-stabilized zirconia (5μm, 10wt.%) | Alumina 100 mesh 70 wt.% | Alumina 3μm 30 wt.% | 42.5 | 35.4 | Fragility Existed | None |
| | 6 | Yttria-stabilized zirconia (200 mesh, 40wt.%) | Non-stabilized zirconia (3μm, 60wt.%) | None | Alumina 3μm 100 wt.% | 8.2 | 5.3 | Cracks Existed | Surface Irregularity After Heating Existed |

Example 13

An alumina-mullite substrate having about 10% in weight of a silica component was used as a substrate. As an intermediate layer, 70% in weight of alumina coarse particle aggregate having 100 mesh and 27%, 2% and 1% in weight of alumina fine particles, calcia fine particles and yttria fine particles, respectively, having an average particle of about 3 μm were prepared. These were uniformly mixed in a ball mill, and then water and polyvinyl alcohol acting as a binder were added thereto for making slurry. The slurry was spray-coated on the surface of the above substrate, and dried at about 100°C. The thickness of the obtained intermediate layer was about 100μm.

As a coarse particle aggregate and a fine particle bond phase of a zirconia surface layer, 60% in weight of yttria ($Y_2O_3$)-stabilized zirconia aggregate having 100 mesh and 40% in weight of yttria-stabilized zirconia particles having an average particle size of 3 μm, respectively, were prepared. As a sintering aid, an oxide mixture consisting of 20 molar % of yttria, 22 molar % of alumina and 58 molar % of calcia was prepared. The amount thereof was 3% in weight with respect to the total amount.

These were uniformly mixed in a ball mill, and then water and polyvinyl alcohol acting as a binder were added thereto for making slurry. The slurry was spray-coated on the surface of the intermediate layer, and dried at about 100°C. The thickness of the zirconia surface layer was about 100 μm. The two-layer coated stack was retained at 1450°C for two hours to provide a jig for calcining an electronic component.

The wear resistance of the thus fabricated jig in a reciprocating wear test conducted in accordance with JIS-H8503 was evaluated. The test conditions were such that a test load was 50gf, and the particle size of the abrasive paper was #600. As a result, the wear resistance was 43 (DS/mg).

Then, the jig was rapidly heated to 1300°C and rapidly cooled to room temperature. After this heat cycle was repeated 50 times, the existence of the cracks and peel-off was investigated. The zirconia surface layer was rubbed with fingers to investigate the particulate removal. As a result, the cracks and the peel-off were not generated, and no particulate removal was observed.

A barium titanate dielectric containing polyvinylalcohol aqueous solution as a binder was shaped in a pellet having a diameter of 10 mm and a thickness of 2mm. After this was placed on the jig for calcining the electronic component and retained at 1300°C for one hour and cooled, the zirconia surface layer and the dielectric were observed to investigate the situation of the binder removal. As a result, the binder removal was excellent. These results are shown in Fig.4.

(Table 4)

| No. | Surface Layer | | | | Inter-mediate Layer | Wear Resistance (DS/mg) | Existence of Fragility and Cracks and Peel-off After Heat Cycles | Grain Removal After Heat Cycles | Binder Removal |
|---|---|---|---|---|---|---|---|---|---|
| | Coarse Particle Aggregate | Fine Particle Bond Phase | Sintering Aid | | | | | | |
| | | | Molar % of Sintering Aid | Amount of Sintering Aid | | | | | |
| Example 13 | Yttria-stabilized zirconia (100mesh, 60wt.%) | Yttria-stabilized zirconia (3 $\mu$ m, 40wt.%) | $Y_2O_3$ 20 $Al_2O_3$ 22 CaO 58 | 3 wt.% | exist | 4.3 | None | None | Excellent |
| Example 14 | Yttria-stabilized zirconia (100 mesh, 60wt.%) | Yttria-stabilized zirconia (3 $\mu$ m, 40wt.%) | $Y_2O_3$ 20 $Al_2O_3$ 22 CaO 58 | 5 wt.% | None | 5.1 | None | None | Excellent |
| Example 15 | Yttria-stabilized zirconia (100 mesh, 70wt.%) | Non-stabilized zirconia (3 $\mu$ m, 30wt.%) | $Y_2O_3$ 20 $Al_2O_3$ 22 CaO 58 | 20 wt.% | exist | 7.2 | None | None | Excellent |
| Example 16 | Yttria-stabilized zirconia (100mesh, 70wt.%) | Yttria-stabilized zirconia (3 $\mu$ m, 30wt.%) | $Al_2O_3$ 25 CaO 30 $SrO$ 45 | 10 wt.% | exist | 3 | None | None | Excellent |
| Comparative Example 7 | Yttria-stabilized zirconia (100 mesh, 70wt.%) | Yttria-stabilized zirconia (3 $\mu$ m, 30wt.%) | None | None | exist | 2 | None | Much | Excellent |
| Comparative Example 8 | Yttria-stabilized zirconia (100 mesh,70wt.%) | Yttria-stabilized zirconia (3 $\mu$ m, 30wt.%) | $Y_2O_3$ 20 $Al_2O_3$ 22 CaO 58 | 0.3 wt.% | None | 4 | None | Much | Excellent |
| Comparative Example 9 | Yttria-stabilized zirconia (60 mesh,90wt.%) | Non-stabilized zirconia (3 $\mu$ m, 10wt.%) | $Y_2O_3$ 20 $Al_2O_3$ 22 CaO 58 | 3 wt.% | exist | 8 | None | Much | Excellent |
| Comparative Example 10 | Yttria-stabilized zirconia (100 mesh,40wt.%) | Yttria-stabilized zirconia (3 $\mu$ m, 60wt.%) | $Y_2O_3$ 20 $Al_2O_3$ 22 CaO 58 | 30 wt.% | exist | 210 | Peel-Off | None | Bad |

Example 14

A jig for calcining an electronic component was fabricated in accordance with the same procedures as those of Example 13 except that an amount of the sintering aid in the zirconia surface layer was 5% in weight and no intermediate layer was used.

The wear resistance was 51 (DS/mg) as a result of the test the same as that of Example 13. Cracks and peel-off due to heat cycles were not generated, and no particle removal was observed. The binder removal was excellent. The results are shown in Table 4.

Example 15

A jig for calcining an electronic component was fabricated in accordance with the same procedures as those of Example 13 except that 70% in weight of yttria-stabilized zirconia having 100 mesh was used as the coarse particle aggregate of the zirconia surface layer, 30% in weight of non-stabilized zirconia particles having an average particle size of 3μm was used as the fine particle bond phase, and an amount of the sintering aid was 20% in weight.

The wear resistance was 72 (DS/mg) as a result of the test the same as that of Example 13. Cracks and peel-off due to heat cycles were not generated, and no particle removal was observed. The binder removal was excellent. The results are shown in Table 4.

Example 16

A jig for calcining an electronic component was fabricated in accordance with the same procedures as those of Example 13 except that 70% in weight of yttria-stabilized zirconia having 100 mesh was used as the coarse particle aggregate of the zirconia surface layer, 30% in weight of non-stabilized zirconia particles having an average particle size of 3 μm was used as the fine particle bond phase, and the sintering aid included 25 molar % of alumina, 30 molar % of calcia and 45 molar % of strontia.

The wear resistance was 30 (DS/mg) as a result of the test the same as that of Example 13. Cracks and peel-off due to heat cycles were not generated, and no particle removal was observed. The binder removal was excellent. The results are shown in Table 4.

Comparative Example 7

A jig for calcining an electronic component was fabricated in accordance with the same procedures as those of Example 13 except that 70% in weight of yttria-stabilized zirconia having 100 mesh was used as the coarse particle aggregate of the zirconia surface layer, 30% in weight of non-stabilized zirconia particles having an average particle size of 3 μm was used as the fine particle bond phase, and no sintering aid was used.

The wear resistance was 2 (DS/mg) as a result of the test the same as that of Example 13, and was significantly inferior. Although cracks and peel-off due to heat cycles were not generated, much particle removal was observed. While the binder removal was excellent, the significant particle removal due to the inferior wear resistance makes the jig inappropriate. The results are shown in Table 4.

Comparative Example 8

A jig for calcining an electronic component was fabricated in accordance with the same procedures as those of Example 13 except that 70% in weight of yttria-stabilized zirconia having 100 mesh was used as the coarse particle aggregate of the zirconia surface layer, 30% in weight of non-stabilized zirconia particles having an average particle size of 3μm was used as the fine particle bond phase, and 0.3 % in weight of the sintering aid was used.

The wear resistance was 4 (DS/mg) as a result of the test the same as that of Example 13, and was significantly inferior. Although cracks and peel-off due to heat cycles were not generated, much particle removal was observed. While the binder removal was excellent, the significant particle removal due to the inferior wear resistance makes the jig inappropriate. The results are shown in Table 4.

Comparative Example 9

A jig for calcining an electronic component was fabricated in accordance with the same procedures as those of Example 13 except that 90% in weight of yttria-stabilized zirconia having 60 mesh was used as the coarse particle aggregate of the zirconia surface layer, and 10% in weight of non-stabilized zirconia particles having an average particle size of 3μm was used as the fine particle bond phase.

The wear resistance was 8 (DS/mg) as a result of the test the same as that of Example 13, and was significantly inferior. Although cracks and peel-off due to heat cycles were not generated, much particle removal was observed. While the binder removal was excellent, the significant particle removal due to the inferior wear resistance makes the jig inappropriate. The results are shown in Table 4.

Comparative Example 10

A jig for calcining an electronic component was fabricated in accordance with the same procedures as those of Example 13 except that 40% in weight of yttria-stabilized zirconia having 100 mesh was used as the coarse particle aggregate of the zirconia surface layer, 60% in weight of yttria-stabilized zirconia particles having an average particle size of 3 μm was used as the fine particle bond phase, and 30 % in weight of the sintering aid was used.
The wear resistance was 21 (DS/mg) as a result of the test the same as that of Example 13. While no particle removal was observed as a result of heat cycles, peel-off of the zirconia surface layer was generated. The binder removal was bad, and the surface irregularity after heating was observed. The peel-off after the heat cycles and the inferior binder removal make the jig inappropriate. The results are shown in Table 4.

Example 17

An alumina-mullite substrate having about 10% in weight of a silica component was used as a substrate. The wear resistance of the substrate itself was about 700°C. As a zirconia surface layer, 70% in weight of yttria ($Y_2O_3$)-stabilized zirconia having #100 mesh, and 30% in weight of yttria-stabilized zirconia having an average particle of about 3 μm were weighed. These were uniformly mixed in a ball mill, and then water and polyvinyl alcohol acting as a binder were added thereto for making slurry. The slurry was spray-coated on the surface of the above substrate. After dried at about 100°C, the spray-coated substrate was retained at 1500°C for two hours for calcining the zirconia layer, thereby fabricating the jig for calcining the electronic component. The thickness of the zirconia layer obtained after the calcination was about 150 μm. The peel-off and the cracks were not observed.
The relative density of the zirconia layer was calculated to be about 60% from the surface area of the surface layer, the film thickness, and the weights of the substrate and of the substrate + the surface layer. However, when only the intermediate layer was coated on the substrate surface and calcined in advance, the relative density of the intermediate layer was calculated in accordance with the above method, and the relative density of the (intermediate layer + zirconia layer) was calculated by using the obtained relative density of the intermediate layer.
The thermal shock resistance ΔT was calculated by using the following method. In the rapid cooling bending test where the jig for calcining the electronic component is rapidly cooled from specified temperature T1 to T2, the thermal shock resistance AT (=T1-T2) expressed as a temperature difference of rapid cooling which generates strength reduction was calculated. After a bending test piece cut off from the substrate was held for 30 minutes at every specified temperature from room temperature to 800°C, the test piece was rapidly cooled in water of 0°C, and the three-point bending test after the rapid cooling was performed. The thermal shock resistance was calculated from the relation between the obtained strength and the temperature difference. The obtained thermal shock resistance was 620°C, and its graph is shown in Fig.1.

## (Table 5)

| No. | Thickness of Surface Layer (μm) | Relative Density of Surface Layer (%) | Intermediate Layer | Thickness of Intermediate Layer (μm) | Relative Density of Intermediate Layer (%) | Substrate | Thermal Shock Resistance ΔT (Peel-off, Cracks) |
|---|---|---|---|---|---|---|---|
| Example 17 | 150 | 60 | None | | | Alumina-Mullite | 620°C No Cracks No Peel-off |
| Example 18 | 200 | 60 | Exist No Sintering Aid | 100 | 70 | Alumina-Mullite | 700°C No Cracks No Peel-off |
| Example 19 | 200 | 65 | None | | | Alumina-Zirconia | 460°C No Cracks No Peel-off |
| Example 20 | 150 | 65 | Exist Sintering Aid | | | Alumina-Zirconia | 560°C No Cracks No Peel-off |
| Comparative Example 11 | 150 | 60 | None | | | Alumina | 260°C |
| Comparative Example 12 | 200 | 92 | | | | Alumina-Zirconia | 380°C |
| Comparative Example 13 | 400 | 50 | Exist Sintering Aid | 400 | 96 | Alumina-Zirconia | Cracks and Peel-off of Surface Layer at 360°C |
| Comparative Example 14 | 300 | 25 | | | | Alumina-Mullite | Significant Grain Drop-off at 200°C |

Example 18

Alumina particles having an average particle size of 30 μm was used as the intermediate layer, and this slurry was spray-coated on the substrate surface and dried at 100°C. Then, similarly to Example 17, a zirconia layer was spray-coated on an alumina intermediate layer followed by drying and calcination to provide a jig for calcining an electronic component having the intermediate layer + the surface layer. The thermal shock resistance ΔT was evaluated similarly to Example 17. The results are shown in Fig.5. The thermal shock resistance was 700°C, and the peel-off of the surface layer and the cracks were not observed.

Example 19

An alumina-zirconia substrate having about 10% in weight of a CaO-stabilized zirconia component was used as a substrate. The wear resistance of the substrate itself was about 560°C. As a zirconia surface layer, 70% in weight of yttria-stabilized zirconia having #100 mesh, 27% in weight of yttria-stabilized zirconia having an average particle of about 3 μm, and 3% in weight of $TiO_2$ acting as a sintering aid were weighed. These were uniformly mixed in a ball mill, and then water and polyvinyl alcohol acting as a binder were added thereto for making slurry. Similarly to Example 17, a zirconia layer was calcined to provide a jig for calcining an electronic component. The evaluation results are shown in Table 5. The thermal shock resistance was 460°C, and the peel-off of the surface layer and the cracks were not observed.

Example 20

An alumina-zirconia substrate similar to Example 19 was used as a substrate. As an intermediate layer, 5% in weightof CaO acting as a sintering aid was added to 95% in weight of alumina particles having an average particle of about 30 μm. As a zirconia layer, 70% in weight of yttria-stabilized zirconia having #100 mesh, 25% in weight of non-stabilized zirconia having an average particle of about 3 μm, and 5% in weight of CaO, $Y_2O_3$ and $Al_2O_3$ acting as a sintering aid were weighed. These were uniformly mixed in a ball mill, and then water and polyvinyl alcohol acting as a binder were added thereto for making slurry. Using the slurry, an alumina intermediate layer was formed on the substrate surface. After the drying at 100°C, a zirconia layer is spray-coated and the intermediate layer and the surface layer were calcined to provide a jig for calcining an electronic component. The evaluation results are shown in Table 5. The thermal shock resistance was 560°C, and the peel-off of the surface layer and the cracks were not observed.

Comparative Example 11

A jig for calcining an electronic component was fabricated in accordance with the same procedures as those of Example 17 except that an alumina substrate having a thermal shock resistance of about 380°C was used. The results are shown in Table 5. The thermal shock resistance was 260°C as shown in Table 5.

Comparative Example 12

A jig for calcining an electronic component was fabricated in accordance with the same procedures as those of Example 17 except that 100% in weight of yttria-stabilized zirconia having an average particle of 3 μm was used as a zirconia layer. The results are shown in Table 5. The thermal shock resistance was 380°C.

Comparative Example 13

An intermediate layer was formed by spray-coating alumina particles having an average particle of 1 μm on an alumina-zirconia substrate having a thermal shock resistance of about 560°C, and was dried at 100°C. A zirconia layer was formed on the intermediate layer similarly to Comparative Example 11 to provide a jig for calcining an electronic component having the intermediate layer and the surface layer. The results are shown in Table 5. The temperature difference of 360°C was applied thereto to make peel-off and cracks on the surface layer.

Comparative Example 14

An intermediate layer was formed by spray-coating alumina particles having an average particle of 1 μm on an alumina-mullite substrate having a thermal shock resistance of about 700°C, and was dried at 100°C. A zirconia layer was formed on the intermediate layer similarly to Comparative Example 11 to provide a jig for calcining an electronic component having the intermediate layer and the surface layer. The results are shown in Table 5. The temperature difference of 200°C was applied thereto to take place significant particle removal.

Since the above embodiments are described only for examples, the present invention is not limited to the above embodiments and various modifications or alterations can be easily made therefrom by those skilled in the art without departing from the scope of the present invention.

**Claims**

**1.** A jig for calcining an electronic component comprising a substrate and a zirconia surface layer formed on the substrate and having an arithmetic average roughness "Ra" from 5 to 40 µm, or a ten-point average roughness "Rz" from 30 to 130 µm, or a maximum height "Ry" from 40 to 200 µm **characterized in that** a skewness (deflection) "Rsk" of the zirconia surface layer is from -0.5 to 0.5.

2. A jig for calcining an electronic component comprising a substrate, an intermediate layer formed on the substrate and a zirconia surface layer formed on the intermediate layer and having an arithmetic average roughness "Ra" from 5 to 40 µm, or a ten-point average roughness "Rz" from 30 to 130 µm, or a maximum height "Ry" from 40 to 200 µm, **characterized in that** a skewness (deflection) "Rsk" of the zirconia surface layer is from -0.5 to 0.5.

3. The jig for calcining the electronic component as claimed in claim 1 or 2, wherein the zirconia surface layer includes from 50 to 75 % in weight of coarse particle aggregate having from 80 to 300 mesh and 50 to 25 % in weight of fine particle bond phase having an average particle size from 0.1 to 10 µm.

4. A jig for calcining an electronic component comprising a substrate and a zirconia surface layer formed on the substrate and having an arithmetic average roughness "Ra" from 5 to 40 µm, or a ten-point average roughness "Rz" from 30 to 130 µm, or a maximum height "Ry" from 40 to 200 µm, **characterized in that** an acutance (kurtosis) "Rku" of the zirconia surface layer is from 2 to 3.

5. A jig for calcining an electronic component comprising a substrate, an intermediate layer formed on the substrate and a zirconia surface layer formed on the intermediate layer and having an arithmetic average roughness "Ra" from 5 to 40 µm, or a ten-point average roughness "Rz" from 30 to 130 µm, or a maximum height "Ry" from 40 to 200 µm, **characterized in that** an acutance (kurtosis) "Rku" of the zirconia surface layer is from 2 to 3.

6. The jig for calcining the electronic component as claimed in claim 4 or 5, wherein the zirconia surface layer includes from 50 to 75 % in weight of coarse particle aggregate having from 80 to 300 mesh and 50 to 25 % in weight of fine particle bond phase having an average particle size from 0.1 to 10 µm.

7. A jig for calcining an electronic component comprising a substrate and a zirconia surface layer formed on the substrate, **characterized in that** a central surface average roughness "Sa" of the zirconia surface layer is from 10 to 40 µm.

8. A jig for calcining an electronic component comprising a substrate, an intermediate layer formed on the substrate and a zirconia surface layer formed on the intermediate layer, **characterized in that** a central surface average roughness "Sa" of the zirconia surface layer is from 10 to 40 µm.

9. The jig for calcining the electronic component as claimed in claim 7 or 8, wherein the zirconia surface layer includes from 50 to 75 % in weight of coarse particle aggregate having from 80 to 300 mesh and 50 to 25 % in weight of fine particle bond phase having an average particle size from 0.1 to 10 µm.

10. A jig for calcining an electronic component comprising a substrate and a zirconia surface layer formed on the substrate, **characterized in that** a wear resistance in a reciprocating wear test conducted in accordance with JIS-H8503 is from 10 to 200 (DS/mg).

11. A jig for calcining an electronic component comprising a substrate, an intermediate layer formed on the substrate and a zirconia surface layer formed on the intermediate layer, **characterized in that** a wear resistance in a reciprocating wear test conducted in accordance with JIS-H8503 is from 10 to 200 (DS/mg).

12. The jig for calcining the electronic component as claimed in claim 10 or 11, wherein the zirconia surface layer includes from 50 to 75 % in weight of coarse particle aggregate having from 80 to 300 mesh and 50 to 25 % in weight of fine particle bond phase having an average particle size from 0.1 to 10 µm bonded with each other by a sintering aid made of two or more metal oxides for increasing the wear resistance.

13. A jig for calcining an electronic component comprising a substrate and a zirconia surface layer formed on the substrate, **characterized in that** a thermal shock resistance $\Delta T$ (=T1-T2) is 400°C or more expressed as a temperature difference of rapid cooling which generates strength reduction in a rapid cooling bending test where the jig for calcining the electronic component is rapidly cooled from specified temperature T1 to T2.

14. A jig for calcining an electronic component comprising a substrate, an intermediate layer formed on the substrate and a zirconia layer formed on the intermediate layer, **characterized in that** a thermal shock resistance $\Delta T$ is 400°C or more.

15. The jig for calcining the electronic component as claimed in claim 13, wherein a thickness of the zirconia layer formed on the substrate is 500 μm or less, and a relative density of the zirconia surface layer is between 40 % and 80% both inclusive.

16. The jig for calcining the electronic component as claimed in claim 14, wherein a total thickness of the zirconia layer formed on the alumina intermediate layer (alumina intermediate layer + zirconia layer) is 500 μm or less; a relative density of the zirconia layer is between 40 % and 80% both inclusive; and a relative density of the alumina intermediate layer is between 60 % and 90% both inclusive.

17. The jig for calcining the electronic component as claimed in claim 13 or 14, wherein metal oxides are used as a sintering aid for calcining the zirconia layer coated on the substrate surface, alumina intermediate layer coated on the substrate surface, and the zirconia layer coated on the alumina intermediate layer.

# Fig. 1

## INTERNATIONAL SEARCH REPORT

| | |
|---|---|
| International application No. | |
| | PCT/JP03/11655 |

**A. CLASSIFICATION OF SUBJECT MATTER**
Int.Cl⁷ C04B35/64, 41/87

According to International Patent Classification (IPC) or to both national classification and IPC

**B. FIELDS SEARCHED**

Minimum documentation searched (classification system followed by classification symbols)
Int.Cl⁷ C04B35/64-35/84, 41/80-41/91

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-128583 A (Mitsui Mining & Smelting Co.,<br>Ltd.),<br>09 May, 2002 (09.05.02),<br>Page 2, column 1, lines 1 to 22<br>(Family: none) | 1-17<br>1-6 |
| Y | JP 5-270925 A (NGK Insulators, Ltd.),<br>19 October, 1993 (19.10.93),<br>Page 2, column 1, lines 1 to 10<br>(Family: none) | 1-6 |
| Y | JP 2001-200378 A (Kyushu Refractories Co., Ltd.),<br>24 July, 2001 (24.07.01),<br>Page 2, column 1, lines 1 to 10; column 2,<br>lines 35 to 36<br>(Family: none) | 1-6 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 January, 2004 (19.01.04) | Date of mailing of the international search report<br>03 February, 2004 (03.02.04) |
|---|---|
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

| International application No. |
| --- |
| PCT/JP03/11655 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-60277 A  (Kabushiki Kaisha Yotai), 26 February, 2002 (26.02.02), Page 2, column 1, lines 1 to 10 (Family: none) | 1-17 |
| A | JP 8-13710 B2  (NGK Insulators, Ltd.), 14 February, 1996 (14.02.96), Page 1, column 1, line 1 to page 2, column 3, line 28 (Family: none) | 1-17 |

Form PCT/ISA/210 (continuation of second sheet) (July 1998)